# EUROPEAN PATENT APPLICATION

(11) **EP 4 814 821 A1**
(43) Date of publication of application: **30.09.2026**
(21) Application number: 25167017.0
(22) Date of filing: 28.03.2025
(51) Int. Cl.: G06Q 10/047, G06Q 10/0631, G06Q 50/40

(54) **METHOD AND SYSTEM FOR OPTIMIZING ELECTRIC VEHICLE FLEET MANAGEMENT IN DEPOT**

(71) Applicant: Siemens Aktiengesellschaft, 80333 München (DE)
(72) Inventor: JAIN, Naman, 134118 Kurukshetra, Haryana (IN); NAGAR, Deepak, 110030 New Delhi (IN); SUBBAIAH BOMMANDA GANAPATHI, Smaran, 90491 Nürnberg (DE); VAZHAPPULLY, Chitira, 560034 Bangalore, Karnataka (IN)
(74) Representative: Patentanwaltskanzlei WILHELM & BECK

(57) **Abstract**

A system (200) and method (100) for optimizing EVs fleet management in a depot. The method (100) includes determining, by the processor (204), a charging zone (10) for executing a charging session of each EV of a plurality of EVs. The parking layout comprises a number of charging zones not equal to a number of buffer zones. The method includes determining, by the processor (204), an order for executing the charging session of each EV in the charging zone, based on charging session priority score and determining, by the processor (204), a set of EVs for executing the charging session based on the order. Further, the method includes dynamically scheduling the set of EVs for executing the charging session to a corresponding charging zone (10) and remaining EVs to a buffer zone; and displaying the schedule of each of the EVs on a screen of each EV in the depot.

## Description

The present disclosure relates generally to optimization of parking of electric vehicles (EVs), and more specifically to a method and system for optimizing electric vehicle (EVs) fleet management in a depot by enabling a bi-directional movement of the EVs between charging zones and buffer zones of the depot.

Vehicle electrification is crucial in mitigating climate change and reducing carbon emissions within transportation sector. Transitioning to electric vehicles (EVs) significantly decreases pollution and reliance on finite resources. However, the successful integration of the EVs into transportation infrastructure heavily relies on efficient fleet management. Smart EV fleet management algorithms play a pivotal role in this regard, facilitating effective management of EV fleet operations such as dispatch, charging and parking. Vehicle fleet owners may have a multitude of vehicles being operated out of a depot. The multitude of vehicles may include for example but not limited to buses of different length, trucks, pickup vans, taxis, etc. All the vehicles have to be parked in the depot before and after a trip. A parking layout of the depot is generally designed to accommodate a large number of vehicles in a limited space. A large number of vehicle fleet owners are transitioning existing depots accommodate operations of EV fleet. The vehicle fleet owners are setting up chargers at the existing depot with existing parking layout.

As the EVs need to be parked and charged at the same place for a long period of time, it becomes a challenging task to optimize the parking layout so that one EV does not block another EV when it has to leave for a trip. Thus, coordinating a charging schedule of the EVs and the parking layout in the depot can be a logistical challenge. It requires managing and optimizing the charging process to ensure that EVs are adequately charged when needed, without causing unnecessary downtime. Efficient scheduling and parking are essential to avoid conflicts and ensure that EVs are ready for use when required.

Generally, the consideration for scheduling charging in the depot is that all parking spots have chargers 14 installed and can charge the EV. However, the assumption need not be true always. Consider a scenario where a number of charging zones 10 is not equal to number of buffer zones 12, as there could be only limited number of spots where the EV can be charged, or charger is installed. In that case, the conventional method often overlook a critical aspect in the EV fleet management algorithms which is utilization of the buffer areas 12 which are parking spaces without charging facilities 14. Also, there is a lack of solution that can handle both dispatch and parking of the EVs in the depot by utilizing bidirectional mobility between charging zones 10 and buffer zones 12 to attain necessary State of Charge (SoC) for completing assigned routes of the EVs. Therefore, an opportunity to enhance both fleet and charging infrastructure utilization is being underutilized and needs to be addressed.

In light of the above, there remains a need for a comprehensive solution for effectively optimizing the way in which the EV fleet is managed within the depot by utilizing both the charging zones and the buffer zones effectively to meet the charging requirement.

The above-mentioned challenges are addressed by the proposed solution by providing an optimized technique for establishing charging sessions for the EVs. The proposed solution includes dynamically assigning either a charging zone or a buffer zone to incoming EVs based on the objective of achieving maximum distance by the EV. Moreover, it facilitates bidirectional movement of EVs between the charging zone and the buffer zones, assuming that only one movement is allowed between charging zone and buffer zone. For example, once a vehicle completes its charging session, it can transition from the charging zone to the buffer zone, freeing up the charger for another EV. Conversely, if a vehicle requires charging for an upcoming route, it can move from the buffer zone to the charging zone. This adaptive system optimizes charger utilization. However, the bi-directional movement is kept very minimal (i.e., only one movement is allowed between charging zone and buffer zones) so that the regular operation of the depot is not disrupted due to frequent movement of the EVs within the depot creating chaos and confusion.

The object of the present disclosure is achieved by a computer-implemented method for optimizing electric vehicle (EVs) fleet management in a depot. The method includes determining, by the processor, a charging zone in a parking layout of the depot, for executing a charging session of each EV of a plurality of EVs in the EV fleet. The parking layout comprises a number of charging zones not equal to a number of buffer zones. The method includes determining, by the processor, an order for executing the charging session of each EV in the determined charging zone, based on a charging session priority score and determining, by the processor, a set of EVs of the plurality of EVs for executing the charging session based on the order. Further, the method also includes dynamically scheduling, by the processor, the set of EVs for executing the charging session to a corresponding charging zone and remaining EVs of the plurality of EVs to a corresponding buffer zone; and displaying, by the processor, the schedule of each of the EVs on a screen of each EV in the depot.

In one or more embodiments, the charging session of each EV of the plurality of EVs in the EV fleet is determined based on a plurality of parameters associated with charging of each EV.

In one or more embodiments, the plurality of parameters associated with charging of the EV fleet comprises specification of each EV in the EV fleet, route information associated with each EV in the EV fleet, information associated with a parking layout in the depot, charging zone and buffer zone)of the parking layout in the depot, a duration of the charging session based on a real-time state of charge (SOC) of the EV.

In one or more embodiments, the charging session priority score associated with an EV is based on the real-time SOC of the EV and a route to be covered by the EV.

In one or more embodiments, the dynamic scheduling of the plurality of EVs is provided by a bi-directional movement of the plurality of EVs between the charging zone and buffer zone of the depot to enable each EV to achieve a required SoC to cover designated routes.

In one or more embodiments, the dynamic scheduling of each EV of the plurality of EVs in the depot is performed with an objective to cover a maximum distance by each EV for the designated routes in a defined operation period.

In one or more embodiments, the charging session of each EV of the plurality of EVs is determined using Mixed Integer Linear Programming (MILP) technique.

In one or more embodiments, the bi-directional movement of the plurality of EVs comprises at least one of: transitioning of the set of EVs of the plurality of EVs from the charging zone to the buffer zone after executing the charging session and transitioning of at least one EV of the remaining EVs from the buffer zone to the charging zone based on the charging session priority score.

The object of the present disclosure is also achieved by a system for optimizing electric vehicle (EVs) fleet management in a depot. The system includes a processor and a memory coupled to the processor, wherein the memory comprises instructions which, when executed by the processor, configures the processor to determine a charging zone in a parking layout of the depot, for executing a charging session of each EV of a plurality of EVs in the EV fleet and determine an order for executing the charging session of each EV in the determined charging zone, based on a charging session priority score. The parking layout comprises a number of charging zones not equal to a number of buffer zones. Further, the processor is also configured to determine a set of EVs of the plurality of EVs for executing the charging session based on the order and dynamically schedule the set of EVs for executing the charging session to a corresponding charging zone and remaining EVs of the plurality of EVs to a corresponding buffer zone. The processor is then configured to display the schedule of each of the EVs on a screen of each EV in the depot.

The object of the present disclosure is further achieved by a computer program code which, when executed by a processor, causes the processor to carry out steps of the aforementioned method.

The object of the present disclosure is further achieved by a computer program product comprising computer program code which, when executed by a processor, causes the processor to carry out steps of the aforementioned method.

Still other aspects, features, and advantages of the disclosure are readily apparent from the following detailed description, simply by illustrating a number of particular embodiments and implementations, including the best mode contemplated for carrying out the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:

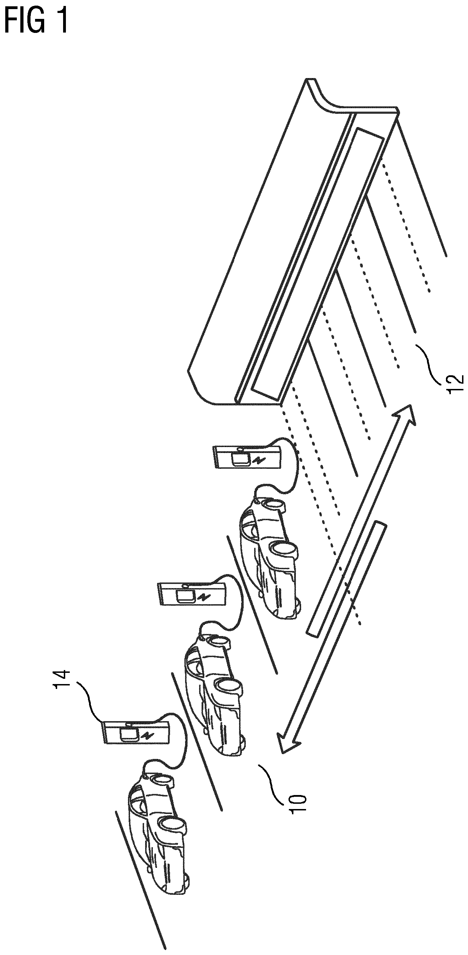

- FIG 1: is an exemplary representation of an EV depot comprising both charging zone and buffer zone, in accordance with one or more prior art;
- FIG 2: is a flowchart representation of a computer-implemented method for optimizing electric vehicle (EVs) fleet management in a depot, in accordance with one or more embodiments of the present disclosure;
- FIG 3: is a block diagram representation of a system for optimizing the EVs fleet management in the depot, in accordance with one or more embodiments of the present disclosure;
- FIG 4: is an overview of the method for managing the utilization of buffer zone and charging zone in the depot, in accordance with one or more embodiments of the present disclosure; and
- FIG. 5: is an example illustrating an EV to route mapping with charging zone and buffer zone allocations, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for optimizing electric vehicle (EVs) fleet management in a depot are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

In the conventional methods and systems, once a vehicle is assigned to a specific zone, be it for charging zone or buffer zone, it remains confined to that zone without the possibility of being relocated to another zone. This means that vehicles depart only from their initially assigned zone. However, this unidirectional constraint on movement between charging and buffer zones significantly hampers fleet efficiency and overall utilization. For example, once a vehicle has completed its charging requirements, it can be relocated to a parking zone, allowing other vehicles in need of charging to utilize the charging infrastructure. Therefore, the absence of bidirectional movement not only constrains operational agility but also limits the fleet's ability to adapt and optimize its utilization, ultimately impacting overall efficiency and effectiveness.

Unlike to the conventional methods and system, the proposed solution provides an optimized technique for establishing charging sessions. The proposed solution includes dynamically assigning either a charging zone or a buffer zone to incoming EVs based on the objective of achieving maximum distance by the EV. Moreover, it facilitates bidirectional movement of EVs between the charging zone and the buffer zones. For example, once a vehicle completes its charging session, it can transition from the charging zone to the buffer zone, freeing up the charger for another EV. Conversely, if a vehicle requires charging for an upcoming route, it can move from the buffer zone to the charging zone. This adaptive system optimizes charger utilization.

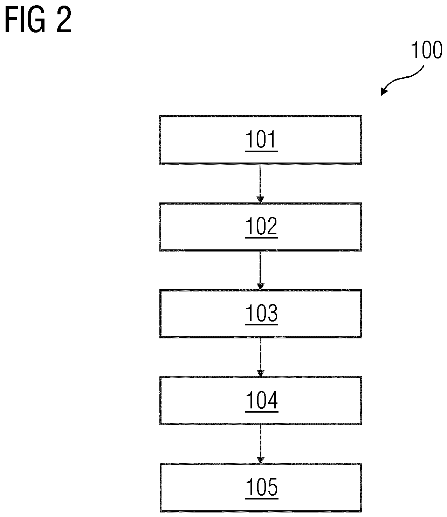

Referring now to FIG 2, illustrated is a flowchart of a method (as represented by reference numeral 100) for optimizing electric vehicle (EVs) fleet management in a depot, in accordance with an embodiment of the present disclosure. As used herein, optimizing the EVs fleet management in the depot refers to a process of scheduling of the EVs for charging within the depot considering routes that needs to be covered by each EV, along with dynamically allocating the EVs to charging zones and buffer zones in the depot. The EVs are generally charged during their parking duration at the depot. However, all parking zones need not have charger-connectors. There are buffer zones without charger-connectors. Therefore, in a scenario where a number of charging zones is not equal to a number of buffer zones, all the EVs parked at the depot cannot be charged. Then, scheduling of the EVs for charging is required which allows bi-directional movement of the EVs between the charging zones and the buffer zones of the depot enabling the EVs to achieve the required State of Charge (SoC) for their designated routes.

This approach aims to enhance the efficiency with which the charging of the EV is achieved within the depot as charging sessions are scheduled by taking into consideration both the charging zones and the buffer zones in the depot. The proposed solution adopts a priority mechanism where a charging session priority score is determined for each of the EVs and based on an order with respect to the charging session priority score, the EVs are scheduled to the charging zones. As a result, fleet operators can strategically plan and park the EVs such that the EVs are able to meet their charging requirement based on their schedule.

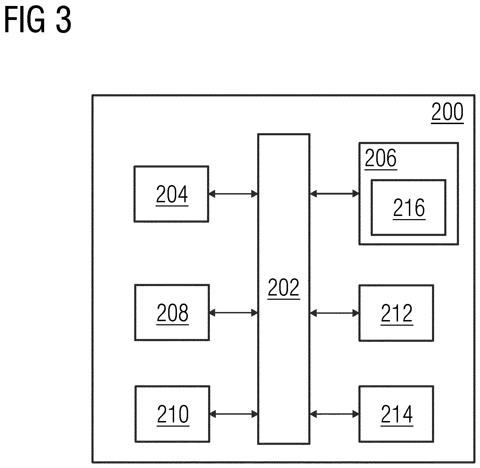

Referring to FIG 3, illustrated is a block diagram of a system 200 for optimizing the EVs fleet management in the depot, in accordance with one or more embodiments of the present disclosure. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the system 200, the database 210 provides mechanisms for storing, retrieving, updating, and deleting data, and typically includes features such as data validation, security, backup and recovery, and data modelling. The database 210 here includes schedule of the multiple EVs which arrive and depart from the depot. The database 210 may be designed using relational or non-relational database management systems, depending on the specific requirements and preferences of the system 200.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display. It is to be understood that, when reference is made in the present disclosure to the term "display" this refers generically either to a display screen on its own or to a screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for route planning of the EVs. In particular, the memory 206 includes an optimization module arrangement 216 to perform steps for optimizing the EVs fleet management in the depot. Also, in the system 200, the memory 206 may be configured to store the data associated with or generated by the execution of the inventive steps.

Referring to FIGS 2 and 3 in combination, the various steps of the method 100 as described hereinafter may be executed in the system 200, or specifically in the processor 204 of the system 200, for - optimizing the EVs fleet management in the depot. For purposes of the present disclosure, optimizing the EVs fleet management in the depot in the present method 100 is embodied as an optimization algorithm for scheduling of the EVs to the charging zones with bi-directional movement between the charging zones and the buffer zones to enable the EVs to achieve the required SOC. It may be appreciated that although the method 100 is illustrated and described as a sequence of steps, it may be contemplated that various embodiments of the method 100 may be performed in any order or a combination and need not include all of the illustrated steps.

In embodiments of the present disclosure, at step 101, the method 100 includes determining a charging zone (10) in a parking layout of the depot, for executing a charging session of each EV of a plurality of EVs in the EV fleet. Here, in the parking layout a number of charging zones is not equal to a number of buffer zones. For example, if there are 20 parking spots in the parking layout of the depot then consider that there are only five charging zones which means only five parking spots have charger-connectors installed. Rest of the fifteen parking spots do not have any charger-connector installed. The charging session of each EV in the EV fleet is determined based on a plurality of parameters associated with the charging of each EV. The plurality of parameters associated with the charging of the EV fleet includes specification of each EV in the EV fleet, route information associated with each EV in the EV fleet, information associated with a parking layout in the depot, the charging zone (10) and the buffer zone (12)of the parking layout in the depot, a duration of the charging session based on a real-time state of charge (SOC) of the EV. In an embodiment, the charging session of each EV of the plurality of EVs is determined using Mixed Integer Linear Programming (MILP) technique which is a mathematical optimization technique used to solve complex problems where some variables must be integers while others can be continuous, all subject to linear constraints. Here, the constraints considered are one route is assigned to not equal to or equal to one EV, multiple routes are assigned to an EV depending upon its battery capacity, no overlapped routes are assigned to the EV, an EV is assigned to a route based upon the vehicle type requirement, and limited number of charging sessions based on available charger/connectors.

At step 102, the method 100 includes determining an order for executing the charging session of each EV in the determined charging zone, based on a charging session priority score.

The charging session priority score associated with the EV is based on the real-time SOC of the EV and a route to be covered by the EV. For example but not limiting the scope of the charging session priority score, consider that the charging session priority score is provided between 1 to 100, with 100 indicating highest priority and 1 indicating lowest priority. Consider the example in Table. 1. Also consider that the depot has 2 charging zones and 3 buffer zones, and that the charging zones are occupied by the fourth EV and second EV.

**Table. 1**

| EV number | Real-time SoC of EV | SoC required to complete designated route | Journey to start within (time) | Charging session priority score |
|---|---|---|---|---|
| First | 60% | 65% | 3 hours | 70 |
| Second | 30% | 50% | 1 hour | 75 |
| Third | 15% | 50% | 1 hour | 80 |
| Fourth | 80% | 50% | 2 hours | 65 |
| Fifth | 80% | 50% | 6 hours | 60 |

From the table 1, it can be noted that the third EV should be prioritized for the charging session above other EVs as the SoC is low and the route designated to the third EV begins within an hour. Hence, the order for executing the charging session based on the charging session priority score will be as in Table. 2:

**Table. 2**

| Order of the EV for executing charging session | Charging session priority score | EV number |
|---|---|---|
| 1 | 80 | Third |
| 2 | 75 | Second |
| 3 | 70 | First |
| 4 | 65 | Fourth |
| 5 | 60 | Fifth |

At step 103, the method 100 includes determining a set of EVs of the plurality of EVs for executing the charging session based on the order. Based on the table. 2, the third EV will be scheduled for executing the charging session first. Therefore, the fourth EV which is currently docked at the charging zone will be scheduled to move to the buffer zone to enable the third EV to be able to execute the charging session in the charging zone. However, the second EV will be continued to charge in the charging zones as per the charging session priority zone.

At step 104, the method includes dynamically scheduling the set of EVs for executing the charging session to a corresponding charging zone (10) and remaining EVs of the plurality of EVs to a corresponding buffer zone. The dynamic scheduling of the plurality of EVs is provided by a bi-directional movement of the plurality of EVs between the charging zone (10) and the buffer zone (12) of the depot to enable each EV to achieve a required SoC to cover designated routes. The dynamic scheduling of each EV of the plurality of EVs in the depot is performed with an objective to cover a maximum distance by each EV for the designated routes in a defined operation period. The bi-directional movement of the plurality of EVs comprises at least one of: transitioning of the set of EVs of the plurality of EVs from the charging zone (10) to the buffer zone (12) after executing the charging session and transitioning of at least one EV of the remaining EVs from the buffer zone (12) to the charging zone (10) based on the charging session priority score. In large depots which accommodates a large number of EVs and having a very large number of charging zones and buffer zones, the proposed solution enables bi-directional movement of the EVs to accommodate the charging of the EVs with highest charging session priority score. However, the bi-directional movement is kept very minimal so that the regular operation of the depot is not disrupted due to frequent movement of the EVs within the depot creating chaos and confusion.

At step 105, the method includes displaying the schedule of each of the EVs on a screen of each EV in the depot. The method includes generating a notification indicating the schedule of each of the EVs and displaying the determined schedule on the screen of the EV. The notification can be for example a message comprising an image or text or coordinates of either the charging zone or the buffer zone in the parking layout. The notification can also include a map of the parking layout indicating the exact charging zone or the buffer zone. The notification can also include details of the available type of charger and procedure for logging into the charger, and the charging schedule for the EV concerned, etc. Further, based on the charging session priority score, the order of charging zone allotment of the EVs id dynamically scheduled. In case there is an EV in the depot then based on the charging session priority score of that EV, the scheduling of the other EVs existing at the depot may be changed. Hence the changed schedule will be displayed to the EVs.

Therefore, the proposed solution ensures seamless charging of the EVs based on the charging session priority score and that the charging requirements are effectively met within the schedule of the EV. Also, in case there are EVs that are parked in the buffer zone and are scheduled to leave the depot for covering the designated routes and require charging, then the EVs which are currently occupying the charging zones can be moved to the buffer zone to accommodate the same. Further, the bi-directional movements are kept at minimal movements to minimize disruption of operations in the depot.

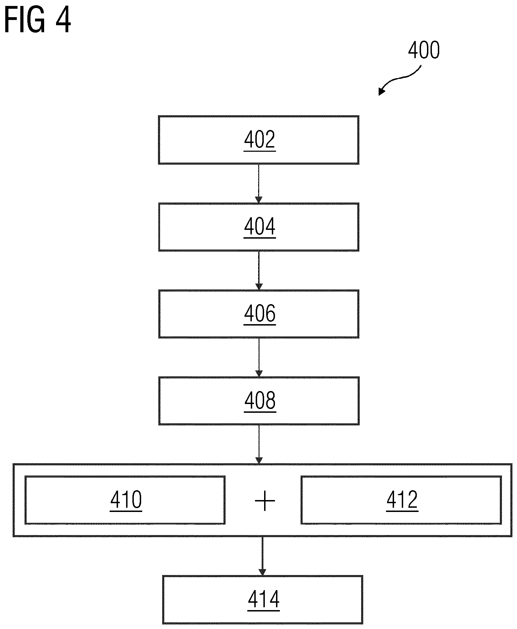

FIG 4 is an overview of the method for managing the utilization of the buffer zone and the charging zone in the depot, in accordance with one or more embodiments of the present disclosure. Referring to the FIG. 4, at step 402, the system 200 receives the inputs which includes various parameters such as for example but not limited to EV specification of each EV in the depot, route description of each EV in the depot, charging zone and buffer zone information of each the depot, initial parking information of the depot, etc. At step 404, the system 200 determines the charging sessions for each of the EVs of the depot. In an embodiment, the charging sessions can be determined based on the Mixed Integer Linear Programming (MILP) technique. However, this is not a limitation, and the charging sessions can be determined by any existing mechanism which considers the various parameters associated with the EVs and the depot.

At step 406, the system 200 considers the charging zone availability and determines the charging sessions again for EVs in the depot. And updates the inputs with the new charging session determined taking into consideration the charging zone availability (408). Further, at step 410, the charging session is combined with the charging session priority score for each EV (412). The charging session priority score is based on the SOC of the EV and the routes to be covered by the EV. This entails scheduling a charging session to commence immediately after the completion of a route, as well as another session to conclude just before the commencement of the subsequent route. Length of the charging session is based on the charging requirement. Introducing this adjusted charging schedule necessitates the incorporation of a new priority constraint into the existing formulation. This constraint ensures that only one charging session is allocated to a bus between consecutive routes, optimizing the scheduling of charging activities within the operational framework.

For example, consider a first EV has a SoC of 60% and is scheduled to cover a route where the journey begins after a period of 3 hours and the SoC required to cover the route is 50%. Consider a second EV which has a SoC of 30% and is scheduled to cover a route where the journey begins within 1 hour and the SoC required to cover the route is 50%. Then the charging session priority score associated with the second EV will be higher than the charging session priority score of the first EV. Therefore, in the order for scheduling the EVs for charging sessions, the second EV will be placed higher than first EV, which means that the second EV will be allotted the charging session before the first EV.

At step 414, the proposed solution determines three different mappings which includes EV to route mapping, EV to charging zone mapping and EV to buffer zone mapping. Here, the proposed solution enables bi-directional movement of the EVs between the charging zone and the buffer zones, therefore enabling the best possible way for the EVs to be charged and if they are not scheduled to depart immediately the EVs can be moved to the buffer zone to allow other EVs to charge at the charging zone. Thus, the proposed solution enables optimization of the process of management of the EVs within the depot by optimizing charging and bi-directional movement of the EVs between the charging zone and the buffer zones.

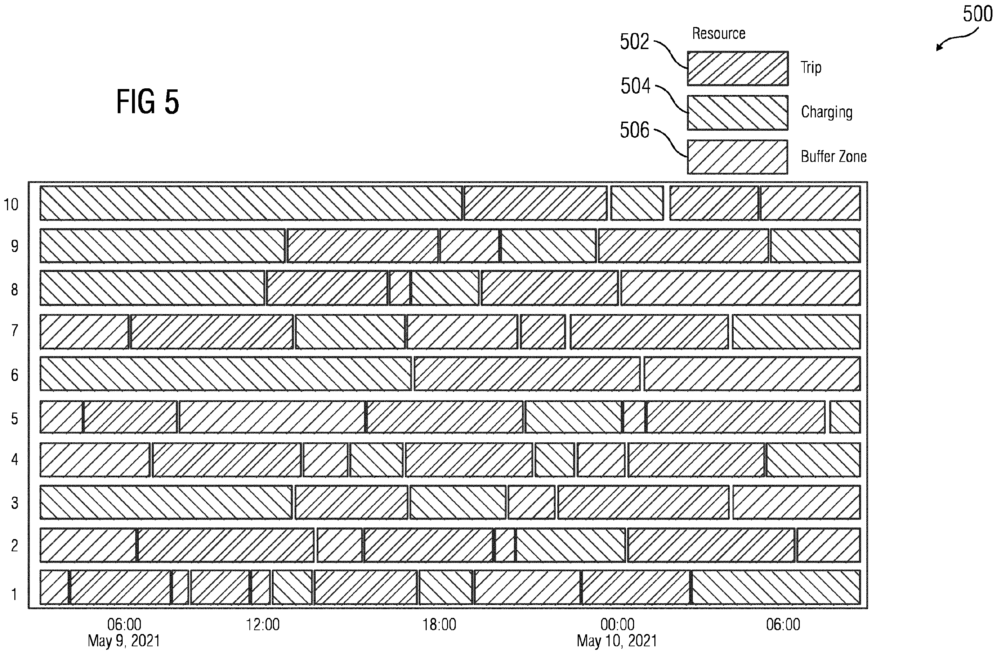

FIG. 5 is an example illustrating an EV to route mapping with the charging zone and the buffer zone allocations, in accordance with one or more embodiments of the present disclosure. Referring to the FIG. 5, the proposed solution is subjected to rigorous testing across various fleet sizes and parking layouts to assess the robustness and effectiveness of the proposed solution in real-world scenarios. Consider an EV fleet of 10 vehicles which are required to cover 60 routes. Also consider this EV fleet is at a depot which comprises 5 charging connectors. The FIG. 5, includes the planned routes (502) and charging sessions (504) assigned to each EV, as well as parking in the buffer zone (506).

From the FIG. 5, it can be derived that not more than 5 charging sessions are planned at any given time during the operation period, as the depot only has 5 connectors available i.e., since only 5 chargers are available at an instance only 5 EVs are allocated for charging and the rest will occupy buffer zones. Therefore, the proposed solutions ensures that the number of charging sessions are always equal to not equal to the number of chargers thereby no overlap or confusion arises due to the proposed solution. The results showcase the meticulous optimization of route allocation, charging sessions, and buffer zone utilization. The intricate interplay between these elements is thoroughly analyzed and presented for scrutiny. This comprehensive approach not only enhances operational efficiency but also provides valuable insights into the optimal management of resources within the depot.

Conventional dispatch methods fail to consider the potential for bidirectional movement of Electric Vehicles (EVs) between charging and buffer zones within the parking layout of the depot. This neglects an opportunity to achieve the required State of Charge (SoC) for their designated routes. This oversight results in a missed chance to optimize both the utilization of the fleet and the charging infrastructure. This approach addresses the issue and unlocks the full potential of buffer areas in optimizing depot operations.

Unlike to the conventional methods and systems, the proposed solution provides the following advantages:
1. Flexibility in parking allocation of the EVs in the depot: Buffer zones provide additional parking space for the EVs, allowing fleet managers to move EVs in-between charging zones and buffer zones based on real-time demand and availability. This flexibility reduces congestion at charging stations and ensures efficient utilization of parking spaces at the depot.
2. Enhanced Operational Efficiency: The proposed solution leverages the buffer zones and thereby enables fleet managers to optimize the distribution of the EVs within the EV fleet, ensuring that vehicles are strategically positioned to meet demand while minimizing downtime. This optimization leads to improved operational efficiency and reduced waiting times for drivers.
3. Cost optimization: Efficient utilization of the buffer areas leads to cost savings by minimizing the need for additional charging infrastructure and optimizing the use of existing resources. By reducing congestion at charging stations, fleet managers can avoid costly investments in expanding charging capacity.
4. Improved Customer Experience: Integrating the buffer areas into fleet management operations enhances the overall customer experience by reducing wait times for charging and parking. The drivers experience less downtime, leading to increased satisfaction and loyalty.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

**Reference Numerals**

| | |
|---|---|
| Charging zone | 10 |
| Buffer zone | 12 |
| Charger connectors | 14 |
| method | 100 |
| step | 101 |
| step | 102 |
| step | 103 |
| step | 104 |
| step | 105 |
| system | 200 |
| bus | 202 |
| processor | 204 |
| memory | 206 |
| interface | 208 |
| database | 210 |
| input device | 212 |
| output device | 214 |
| module arrangement | 216 |
| method | 400 |
| step | 402 |
| step | 404 |
| step | 406 |
| step | 408 |
| step | 410 |
| step | 412 |
| step | 412 |
| Mapping drawing | 500 |
| Trip | 502 |
| Charging zone | 504 |
| Buffer zone | 506 |

## Claims

1. A method for optimizing electric vehicle (EVs) fleet management in a depot, the method (100) comprising:
determining, by the processor (204), a charging zone (10) in a parking layout of the depot, for executing a charging session of each EV of a plurality of EVs in the EV fleet, wherein the parking layout comprises a number of charging zones not equal to a number of buffer zones;
determining, by the processor (204), an order for executing the charging session of each EV in the determined charging zone, based on a charging session priority score;
determining, by the processor (204), a set of EVs of the plurality of EVs for executing the charging session based on the order;
dynamically scheduling, by the processor (204), the set of EVs for executing the charging session to a corresponding charging zone (10) and remaining EVs of the plurality of EVs to a corresponding buffer zone; and
displaying, by the processor (204), the schedule of each of the EVs on a screen of each EV in the depot.

2. The method (100) according to claim 1, wherein the charging session of each EV of the plurality of EVs in the EV fleet is determined based on a plurality of parameters associated with charging of each EV.

3. The method (100) according to claim 2, wherein the plurality of parameters associated with charging of the EV fleet comprises specification of each EV in the EV fleet, route information associated with each EV in the EV fleet, information associated with a parking layout in the depot, charging zone (10)and buffer zone (12)of the parking layout in the depot, a duration of the charging session based on a real-time state of charge (SOC) of the EV.

4. The method (100) according to claim 1, wherein the charging session priority score associated with an EV is based on the real-time SOC of the EV and a route to be covered by the EV.

5. The method (100) according to claim 1, wherein the dynamic scheduling of the plurality of EVs is provided by a bi-directional movement of the plurality of EVs between the charging zone (10) and buffer zone (12) of the depot to enable each EV to achieve a required SoC to cover designated routes.

6. The method (100) according to claim 1, wherein the dynamic scheduling of each EV of the plurality of EVs in the depot is performed with an objective to cover a maximum distance by each EV for the designated routes in a defined operation period.

7. The method (100) according to claim 1, wherein the charging session of each EV of the plurality of EVs is determined using Mixed Integer Linear Programming (MILP) technique.

8. The method (100) according to claim 5, wherein the bi-directional movement of the plurality of EVs comprises at least one of: transitioning of the set of EVs of the plurality of EVs from the charging zone (10)to the buffer zone (12)after executing the charging session and transitioning of at least one EV of the remaining EVs from the buffer zone (12)to the charging zone (10)based on the charging session priority score.

9. A system (200) for optimizing electric vehicle (EVs) fleet management in a depot, the system (200) comprising:
a processor (204); and
a memory (206) coupled to the processor (204), wherein the memory (206) comprises instructions which, when executed by the processor (204), configures the processor (204) to:
determine a charging zone (10) in a parking layout of the depot, for executing a charging session of each EV of a plurality of EVs in the EV fleet, wherein the parking layout comprises a number of charging zones not equal to a number of buffer zones;
determine an order for executing the charging session of each EV in the determined charging zone, based on a charging session priority score;
determine a set of EVs of the plurality of EVs for executing the charging session based on the order;
dynamically schedule the set of EVs for executing the charging session to a corresponding charging zone (10) and remaining EVs of the plurality of EVs to a corresponding buffer zone; and
display the schedule of each of the EVs on a screen of each EV in the depot.

10. A computer program product, comprising computer program code which, when executed by a processor (204), cause the processor (204) to carry out the method (100) of one of the claims 1 to 8.

11. A computer-readable medium comprising a computer program product comprising computer program code which, when executed by a processor (204), cause the processor (204) to carry out the method (100) of one of the claims 1 to 8.
